# EUROPEAN PATENT SPECIFICATION

(11) **EP 1 229 628 B1**
(45) Date of publication and mention of the grant of the patent: **25.06.2008**
(21) Application number: 02001765.3
(22) Date of filing: 25.01.2002
(51) Int. Cl.: H02H 7/085, B66B 13/14, E05F 15/12

(54) **Control method and device for ensuring mechanical safety to a gate or door having at least one electrically operated wing**
Steuerungs-Verfahren und Vorrichtung für die mechanische Sicherheit eines Tores oder einer Tür mit wenigstens einem elektrisch betriebenen Flügel
Méthode et dispositif de contrôle pour la securité mecanique d'un portail ou d'une porte equippés d'au moins un battant actionné électriquement

(30) Priority: 02.02.2001 IT TV010015
(43) Date of publication of application: 07.08.2002
(73) Proprietor: NICE SpA, 31046 Oderzo (Treviso) (IT)
(72) Inventor: Marchetto, Oscar, 31046 Oderzo (Treviso) (IT)
(74) Representative: Agostini, Agostino

(56) References cited:
- DE-A- 4 214 998
- DE-A- 19 504 032
- US-A- 4 394 607
- US-A- 4 533 901
- US-A- 5 278 480

## Description

The present invention relates to a control method and device of a gate or door having at least one electrically operated wing for ensuring that the opening and closing movements take place in mechanically safe conditions.

It must be stated beforehand that the present description makes reference to gates and geared motors only for simplicity, as the invention is applicable to doors and other electrical wing operating means as well.

The correct operation of a gate implies the compliance with prescriptions of technical standards, among which it is fundamental the one relating to mechanical safety whereby the effects are to be limited of the impact of the wings against an obstacle that by opposing to the movement does not allow the correct operation.

Geared motors, consisting of an electric motor, that may be power supplied by alternate current directly from the mains or by direct current, and of a set of gears connected to a suitable mechanism, are the most common electrical operating means for wings that may be one or two, even different from each other regarding size and angular excursion of the opening and closing movements.

Each kind of motor has advantages and disadvantages in terms of easy of use and cost, and, usually, an obstacle that opposes to the movement of the wings puts the geared motor under stress and causes, even if in different manners, an increase in the current consumption.

There are known systems for avoiding dangerous situations, one of which consists in reducing the voltage supplied to the geared motor through an autotransformer to a value sufficiently low so that the movement of the wings be slow and therefore not dangerous in case of an unexpected obstacle. The realization of this system is laborious and necessarily needs to be entrusted to competent personnel, who has to take into account the actual constructive characteristics and the installation conditions of the gate.

It is known, for example from patent US-A-5 956 249, to provide a gate with a microprocessor unit. During a calibration procedure, in the non-volatile memory a plurality of programmable functional parameters are loaded, among which the current consumption of the geared motor that, during normal operation, are compared with data detected in real time in order to vary the movement of the wing thus ensuring the necessary mechanical safety. The hardware used is particularly complex and has a high manufacturing cost (also due to the use of sophisticated components such as an "encoder") in order to monitor the instantaneous position of the wing in such a way as to distinguish between the impact against an unexpected obstacle and the impact against the stop devices. These kinds of systems are too expensive for a large-scale use and, even if usable, the calibration procedure is delicate and can be performed only by particularly qualified personnel, usually during installation of the door.

German Patent DE 42 14 998 discloses a system to monitor power consumption of a garage door during the opening and closing movements. When the power consumption exceeds a pre-stored profile the gate is de-energized.

German Patent DE 19 50 4032 discloses a safety driving system to control a gate door. The system carries on a measurement of the actual current absorbed by the motor driving the gate and compares it with a pre-stored current profile. When the current exceeds the pre-stored profile the gate is de-energized.

It would be desirable and, in fact, it is the main object of the invention to control the operation of the gate having one or more wings operated by geared motors in order to satisfy the mechanical safety prescriptions in a way that would be easy, reliable, and at low cost, particularly through the use of a control unit whose calibration may be performed also by personnel with a limited technical knowledge.

Therefore the subject of the invention is a control method and device for electrically operated gates having the features claimed in the following that achieve this and other objects. There are also claimed gates and doors controlled according to this method.

By way of non-limitative example there is provided a description of an embodiment of the invention, that will allow to appreciate its specificities and advantages, with reference to the attached drawing wherein :
Fig.1 shows the schematic floor plan of an installation of a gate where different angular positions of two different wings may be seen;
Fig.2 shows the essential electrical configuration of a control unit according to the invention for the gate of Fig.1.

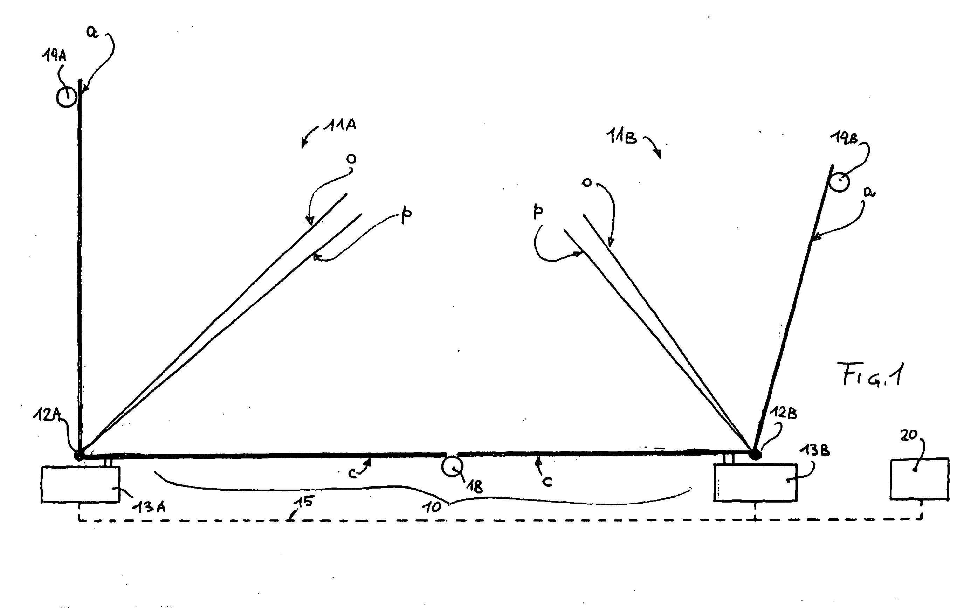

In Fig.1 there is shown in schematic form the installation of a gate, globally indicated by numeric reference 10, having two wings 11A, 11B that are different from each other regarding both size and angular excursion of the opening and closing movements. Wings 11A, 11B are hingedly mounted on posts 12A, 12B and operated, through well known mechanisms (not shown), by corresponding geared motors 13A, 13B. In the installation area of gate 10 there are located a stop device 18 for both wings corresponding to the complete closing angular position, indicated by "c", and two stop devices 19A, 19B, respectively for the first wing 11A and the second wing 11B, corresponding to the respective maximum opening positions that are indicated by "a".

For simplicity, because they may be totally traditional and finally because they are not directly related to the invention, there are not described and shown herein "standard" safety devices and auxiliary devices of gate 10, such as photoelectric cells, blinking lights for indication of the gate movement, the receiving antenna of the remote control devices and the key selector for manual operation.

In order to control gate 10, the invention provides for the use of a control unit 20, housed within a box that may be opened only by a fully aware people and is located in the immediate surroundings. An electrical line 15 connects control unit 20 to geared motors 13A, 13B.

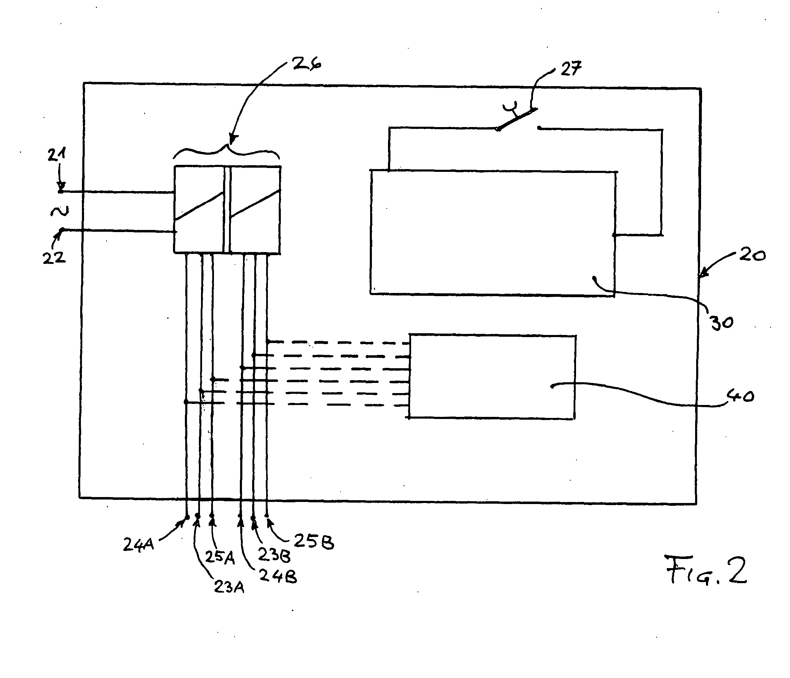

In its most essential configuration, shown in Fig.2, control unit 20 (that is preferably housed within a box that may be opened only by true intention, for electrical safety reasons) comprises :
- two input terminals 21 and 22 that can be connected to the phases L and N of the electrical supply mains (for example 230 VAC);
- two sets of three terminals 23A (common), 24A (close), 25A (open) for the first geared motor 13A and 23B (common), 24B (close), 25B (open) for the second geared motor 13B at the output of a set of relays that are globally indicated by reference 26. These terminals are respectively connected to corresponding electrical cables comprised in said line 15;
- a first electrical switch 27 normally opened, preferably a button switch, (suitably located within the above mentioned box) that is operated only during the calibration procedure of unit 20, as will be described hereinafter;
- a second electrical switch (not shown for simplicity) that, in case of emergency, stops the operation of geared motors 13A, 13B;
- a circuit 40 adapted to detect time after time the intensity of the current I flowing into geared motors 13A, 13B through said terminals;
- a microprocessor 30, connected to both the set of relays 26 and the circuit 40, in whose memory is stored a positive differential ΔI of current flowing into geared motors 13A, 13B. According to the specific embodiment of the invention microprocessor 30 may keep in memory a single value or a discrete number of values, naturally, such as not to prejudice the efficiency of the geared motors and the mechanical safety of the gate;
- warning lights and other components totally conventional and not directly related to the invention (that for simplicity are neither described nor shown herein).

### Calibration procedure of control unit 20

The calibration procedure (that, as may be ascertained, is so simple that it can be entrusted even to personnel without particularly deep technical knowledge) must necessarily be performed at the installation time of the gate, but it may be also repeated after, for example after repairing the geared motors.

Before performing the calibration procedure, the fitter may select a different value for the current positive differential ΔI (in case the embodiment of the invention provides for this possibility) between those stored in the memory of microprocessor 30 of control unit 20, in order to take into account specific needs, naturally without prejudice to the efficiency of the geared motors and to the safety of the gate.

After that wings 11A and 11B are manually positioned at about the midpoint of the opening and closing trajectory (i.e. at angular positions marked by letter "p" in Fig.1), the following steps take place sequentially :
A - consent to the power supply from the mains to unit 20 through input terminals 21, 22 ;
B - consent to the calibration of unit 20 by light and/or sound warning ;
C - execution of the calibration, according to its strict meaning, through a single operation of the above mentioned button 27 for automatically achieving sequentially :
   (i) activation for a very short time of the relays belonging to set 26 that supply power to both geared motors 13A, 13B through terminals 23A, 25A and 23B, 25B for opening a bit further the wings 11A, 11B that move from positions "p" in Fig.1 to positions "o" in Fig.1;
   (ii) activation only of the relay that supplies power to geared motor 13B through terminals 23B, 24B for rotating wing 11B in the opposite direction than before, till when it hits the closing stop device 18 (position "c" in Fig.1). Control unit 20 detects the impact from the sudden increase in the current flowing into geared motor 13B and consequently deactivates said relay;
   (iii) in case that gate 10 has only one wing, this step does not take place. Control unit 20 detects the eventual presence of the other geared motor 13A and activates the relay that supplies power to it through terminals 23A, 24A for rotating the corresponding wing 11A till when it hits the same closing stop device 18 at position "c". The detection of this position and the consequential deactivation of the relay take place as already explained at preceding point (ii);
   (iv) activation of both geared motors 13A, 13B (with eventual little time shift for avoiding mechanical interference between the two wings of the gate) respectively through terminals 23A, 25A and 23B, 25B for a working time TL that is necessary for completely opening each of the wings 11A e 11B, i.e., for moving them from positions "c" in Fig.1 to positions "a" in Fig.1 in contact with respective opening stop devices 19A, 19B. In this case also, control unit 20 detects the impacts from the sudden increases in the currents flowing into geared motors 13A, 13B. It is worth mentioning that the time value TL is not fictitious or arbitrary but takes into account the real installation conditions of the gate (such as the torque of the geared motors, the inertia of the wings, the friction on the hinges). For simplicity, this description assumes that it is equal for both wings, but it makes no difference if the size and/or the angular excursions of the opening and closing movements of the wings are different, in this last case the working time of wing 11A is indicated by TL1 and that of wing 11B by TL2. Additionally it is assumed equal the duration of the movements for the complete closing of the two wings, i.e. for moving from the angular positions "a" to positions "c", and for the complete opening, i.e. for moving from angular positions "c" to positions "a". In all cases, said value TL, after having been measured, is loaded into the memory of microprocessor 30;
   (v) by microprocessor 30, computing and loading into memory of times T1 and T2 (in the order of magnitude of few seconds) to be considered as small percentages of the working time TL. In practice, said times T1, T2 are "tolerances" that take into account possible slowing of the movements of the wings due to occasional factors, such as the weather and environment conditions (for example windblasts, quick temperature variations), and that take into account also start-up transient of the geared motors. Therefore it is during the time interval TL - (T1 + T2) , in practice during almost the whole opening and closing movements of wings 11A and 11B, that the invention ensures the necessary mechanical safety to gate 10 as will be explained in the following. It must also be taken into account that microprocessor 30 is also able to store slow and globally small variations of the working time TL that are due to the wear of mechanical and/or electrical parts of the gate during years of operation and/or to weather variations during the year;
   (vi) inversion of the rotation of geared motors 13A, 13B (now power supplied through terminals 23A, 24A and 23B, 24B) for completely closing both wings 11A, 11B caused by their impacts against stop device 18 detected in the same manner as said before.

### Operation of the gate

From what explained above, during normal operation of gate 10, the invention considers as potentially dangerous for the mechanical safety the presence of an obstacle when wings 11A, 11B are moving for the whole duration of time interval TL - (T1 + T2) . Consequently, at every movement of wings 11A, 11B (irrespective whether an opening movement or a closing movement) due to geared motors 13A, 13B, the following steps are performed :
D - at the beginning of time interval TL - (T1 + T2) , circuit 40 of control unit 20 detects the steady value Io of the current flowing into each geared motor. Consequently, microprocessor 30 computes and stores into memory the value Io + ΔI as the maximum admissible value for the instantaneous current flowing into each geared motors;
E - successively, till the end of time interval TL - (T1 + T2) , microprocessor 30 of control unit 20 compares the value of the current actually flowing (detected by circuit 40) into each geared motor 13A, 13B against the limit value Io + ΔI stored in memory;
F - if for at least one geared motor, at any time of said time interval TL - (T1 + T2) , a current I is detected that is greater or equal to Io + ΔI , it means that the corresponding wing has hit an unexpected obstacle and therefore there exists a potential risk for the mechanical safety of gate 10. According to a fundamental characteristic of the invention, control unit 20 activates immediate switch of the power supply for inverting the sense of rotation of those geared motors (one or both, depending on whether the obstacle opposes to the movement of one or both gate wings) whose detected instantaneous current I has exceeded the predetermined limit Io + ΔI. The movement of the corresponding wing (or both wings) in the opposite direction continues till the impact against the relevant stop device 18 (if the obstacle has been encountered during an opening movement of gate 10) or stop devices 19A, 19B (during a closing movement), that are still detected as explained above;
G - within the "tolerances" T1, T2 the detection by circuit 40 of control unit 20 of an increase of the instantaneous current flowing through at least a geared motor beyond the limit Io + ΔI , leads to the stop of the geared motors 13A, 13B as this is imputed to the impact of the corresponding wing against the stop devices 18 or 19A, 19B.

From the above description the following advantages provided by the inventions are apparent :
- the control of the movements of the wings is realistic, in the sense that it takes into account the real installation and operation conditions of the gate;
- the geared motors (or other eventual electrical wing operating means) may also use single-phase asynchronous motors, that are reliable and inexpensive, as it is well known;
- it is not necessary to use sophisticated and expensive components such as "encoders", whereby the control device has a simple construction and a low cost;
- the calibration procedure of the control unit 20, with a single activation of the single switch 27, is extremely simple and, therefore, may be performed also by personnel with a limited technical knowledge;
- during calibration the control unit automatically detects the presence of one or two geared motors, i.e. whether the gate has one or two wings;
- in case of two wings, the control is independent and, therefore, the sizes and/or the angular excursions of the movements of the wings may be quite different from each others;
- the control method adapts itself to the real operating conditions of the gate and, therefore, it is insensitive to wear and to climate and weather variations.

## Claims

1. Method for ensuring a safe operation to a gate or a door (10) having at least a wing (11A, I 1B) electrically operated by associated motor means (13A, 13B), comprising a calibration procedure wherein reference functional data are detected and loaded by a control unit (20) into memory, and a detection and comparison phase of the corresponding instantaneous data during the opening and closing movements of the wings (11A, 11B) during normal operation for causing an immediate intervention on at least one motor means (13A, 13B) if from the comparison the exceeding of at least a reference limit value is detected, wherein
during the calibration procedure there is loaded into memory by the control unit (20) a predetermined positive current deviation value of the current flowing into each motor means (13A, 13B), **characterised in that**
there are detected and loaded into memory the working times (TL1, TL2) necessary for the complete opening or closing of each wing (11A, 11B),
there are computed small percentages (T1, T2) of said working times (TL1, TL2) that corresponds to time tolerances for start-up transients of the motor means (13A, 13B) and their impact against stop devices during a opening or closing movement, and there are computed the time intervals given by the difference between said working times and the corresponding tolerance (TL1 - (T1 + T2), TL2 - (T1 + T2) ),
and at every movement of the gate (10), irrespective whether an opening movement or a closing movement:
at the beginning of said computed time intervals ( TL1 - (T1,T2) , TL2 - (T1,T2) ), the steady value (Io) is detected of the current flowing into each motor means (13A, 13B) and loaded into memory together with said current deviation value ( DELTA I) to compute a current limit value given by the sum of the steady value (Io) and the current deviation value ( DELTA I);
for the whole duration of said computed time intervals (TL1 - (T1 + T2), TL2 - (T1 + T2)), there is detected time after time the instantaneous value (I) of the current actually flowing into each motor means (13A, 13B) and compared against the corresponding current limit value (Io, DELTA I), and in case the instantaneous value (I) of the current actually flowing into each geared motor (13A, 13B) is greater than the corresponding current limit value (Io, DELTA I), the power supplied to the motor means is switched in order to perform an inversion of the movement of the corresponding wing till it stops at its limit stop; while
within the time tolerances (T1, T2) if said instantaneous value (I) of the current is beyond the current limit, the motor means are stopped.

2. Method according to claim 1, **characterized in that** the calibration procedure of the control unit (20) consists of the following steps, performed after that at least one of the wings (11A, 11B) is manually positioned in first angular positions (p) located at about the midpoint of the opening and closing trajectory, and after that the electrical connections have been established:
short activation of the motors means (13A, 13B) for opening a bit further the wings (11A, 11B) till second angular positions (o);
activation of a motor means (13B) till the complete closing, corresponding to a third angular position (c), of the corresponding wing (11B);
activation of the eventual other motor means (13A) till the complete closing, corresponding to a third angular position (c), of the corresponding wing (11A);
activation of both motor means (13A, 13B), with eventual time shift, for achieving a complete opening of the two wings (11A, 11B) till fourth angular positions (a) and for detecting the respective working times (TL1, TL2) and computing said time intervals ( TL1 - (T1,T2), TL2 - (T1,T2)).

3. Method according to claim 2, **characterized in that**, before starting the calibration procedure, there is selected, between a discrete number of values predetermined and loaded into the memory of the control unit (20), the value of said current positive current deviation value ( DELTA I) to be combined with said steady value (Io) of the current consumption.

4. Device for carrying out the method according to any of claims from 1 to 3, the device including a control unit (20) comprising:
at least an electrical circuit (40) for detecting the current flowing into motor means (13A, 13B),
a microprocessor (30) adapted to detect, memorize and compare time and current values detected by said circuit (40), such that
during a calibration procedure there is loaded into memory a predetermined positive current deviation value of the current flowing into each motor means (13A, 13B), **characterised in that**
there are detected and loaded into memory the working times (TL1, TL2) necessary for the complete opening or closing of each wing (11A, 11B),
there are computed small percentages (T1, T2) of said working times (TL1, TL2) that corresponds to time tolerances= for start-up transients of the motor means (13A, 13B) and their impact against stop devices during a opening or closing movement, and there are computed the time intervals given by the difference between said working times and the corresponding tolerance (TL1 - (T 1 + T2), TL2 - (T 1 + T2)),
relay means (26) for supplying power to motor means,
an electrical switch (27), preferably a button switch, associated to the microprocessor (30) such that, once it has been activated a single time, achieves sequentially all said steps of the calibration procedure,
the microprocessor (30) being adapted to control gate such that:
while at every movement of the gate (10), irrespective whether an opening movement or a closing movement, at the beginning of said computed time intervals ( TL1 - (T 1 + T2) , TL2 - (T1 + T2) ), the steady value (Io) is detected of the current flowing into each motor means (13A, 13B) and loaded into memory together with said current deviation value (DELTA I) to compute a current limit given by the sum of the steady value (Io) and the current deviation value (DELTA I);
for the whole duration of said computed time intervals (TL1 - (T1 + T2), TL2 - (T1 + T2)), there is detected time after time the instantaneous value (I) of the current actually flowing into each motor means (13A, 13B) and compared against the corresponding current limit value (Io, DELTA I), and in case the instantaneous value (I) of the current actually flowing into each motor means (13A, 13B) is greater than the corresponding current limit value (Io, DELTA I), the power supplied to the motor means is switched in order to perform an inversion of the movement of the corresponding wing till it stops at its limit stop; while
within the time tolerances (T1, T2) if said instantaneous value (I) of the current is beyond the current limit value, the motor means are stopped.

5. Device according to claim 4, **characterized in that** said electrical switch (27) is accessible only from the inside of a box that houses the control unit (20) and has a safety closure.

6. Gate having at least one electrically operated wing (11B), **characterized in that** it is controlled according to the method according to any of claims from 1 to 3 and/or it is provided with a control device according to claims 4 or 5.

7. Gate according to claim 6, **characterized in that** the motor means of said at least one wing is a geared motor (13B) that uses a single-phase asynchronous motor.

8. Gate according to claim 6 or 7, **characterized in that** it comprises two wings (11A, 11B) having sizes and/or angular excursions of the opening and closing movements that are different from each other.

## Patentansprüche

1. Verfahren zum Sicherstellen eines sicheren Betriebs eines Tors oder einer Türe (10), die zumindest einen Flügel (11A, 11B) aufweist, der elektrisch durch ein zugeordnetes Motormittel (13A, 13B) betrieben wird, mit
einem Kalibrierungsvorgang, in dem Referenzfunktionsdaten erfasst und von einer Steuereinheit (20) in einen Speicher geladen werden, und
einem Erfassungs- und Vergleichsvorgang der entsprechenden momentanen Daten während der Bewegungen des Öffnens und Schließens der Flügel (11A, 11B) während des Normalbetriebs zum Bewirken eines sofortigen Eingriffs an zumindest einem Motormittel (13A, 13B), wenn aus dem Vergleich das Überschreiten zumindest eines Referenzgrenzwerts ermittelt wird,
wobei während des Kalibrierungsvorgang von der Steuereinheit (20) ein vorbestimmter positiver Stromabweichungswert des Stroms, der in jedes Motormittel (13A, 13B) fließt, in den Speicher geladen wird,
**dadurch gekennzeichnet, dass**
die Arbeitszeiten (TL1, TL2), die zum vollständigen Öffnen oder Schließen jedes Flügels erforderlich sind, erfasst und in den Speicher geladen werden,
kleine Prozentanteile (T1, T2) der Arbeitszeiten (TL1, TL2) berechnet werden, die den Zeittoleranzen für Anfahrtransienten der Motormittel (13A, 13B) und ihren Anstoß gegen Endvorrichtungen während einer Bewegung des Öffnens oder Schließens entsprechen, und Zeitbereiche (TL1 - (T1+T2), (TL2 - (T1+T2)) berechnet werden, die durch den Unterschied zwischen den Arbeitszeiten und der entsprechenden Toleranz gegeben sind,
bei jeder Bewegung des Tores (10), unabhängig davon, ob es eine Bewegung des Öffnens oder eine Bewegung des Schließens ist:
zu Beginn der berechneten Zeitbereiche (TL1 - (T1+T2), (TL2 - (T1+T2)) der stationäre Wert (Io) des Stroms, der in jedes Motormittel (13A, 13B) fließt, erfasst und zusammen mit dem Stromabweichungswert (DELTA I) in den Speicher geladen wird, um einen Stromgrenzwert zu berechnen, der durch die Summe aus dem stationären Wert (Io) und dem Stromabweichungswert (DELTA I) gegeben ist,
während der gesamten Dauer der berechneten Zeitbereiche (TL1 - (T1+T2), (TL2 - (T1+T2)) von Zeit zu Zeit der Momentanwert (I) des Stroms, der tatsächlich in jedes Motormittel (13A, 13B) fließt, erfasst und mit dem entsprechenden Stromgrenzwert (Io, DELTA I) verglichen wird und in dem Fall, in dem der Momentanwert (I) des Stroms, der tatsächlich in jeden Getriebemotor (13A, 13B) fließt, größer als der entsprechende Stromgrenzwert (Io, DELTA I) ist, die dem Motormittel zugeführte Leistung geschaltet wird, um eine Umkehr der Bewegung des entsprechenden Flügels durchzuführen, bis er an seinem Grenzanschlag anhält, während
innerhalb der Zeittoleranzen (T1, T2) das Motormittel angehalten wird, wenn der Momentanwert (I) des Stroms den Stromgrenzwert übersteigt.

2. Verfahren gemäß Anspruch 1, **dadurch gekennzeichnet, dass** der Kalibrierungsvorgang die folgenden Schritte enthält, die durchgeführt werden, nachdem zumindest einer der Flügel (11A, 11B) von Hand in einer ersten Winkelstellung (p) positioniert wurde, die etwa in der Mitte der Bahn des Öffnens und Schließens liegt, und nachdem die elektrischen Verbindungen hergestellt wurden:
kurze Aktivierung des Motormittels (13A, 13B) zum etwas weiteren Öffnen der Flügel (11A, 11B) bis zu einer zweiten Winkelstellung (o),
Aktivierung des Motormittels (13B) bis zum vollständigen Schließen des entsprechenden Flügels (11B), was einer dritten Winkelstellung (c) entspricht,
eventuell Aktivierung des anderen Motormittels (13A) bis zum vollständigen Schließen des entsprechenden Flügels (11A), was einer dritten Winkelstellung (c) entspricht,
Aktivierung beider Motormittel (13A, 13B), möglicherweise mit Zeitversatz, zum Erzielen eines vollständigen Öffnens der beiden Flügel (11A, 11B) bis zu einer vierten Winkelposition (a) und zum Erfassen der jeweiligen Arbeitszeiten (TL1, TL2) und zum Berechnen der Zeitbereiche (TL1 - (T1+T2), (TL2 - (T1+T2)).

3. Verfahren gemäß Anspruch 2, **dadurch gekennzeichnet, dass** vor Beginn des Kalibrierungsvorgangs der Wert des positiven Stromabweichungswerts (DELTA I) des Stroms, der mit dem stationären Wert (Io) des Stromverbrauchs kombiniert werden soll, aus einer diskreten Anzahl vorherbestimmter und in den Speicher der Steuereinheit (20) geladener Werte ausgewählt wird.

4. Vorrichtung zum Durchführen des Verfahrens gemäß einem der Ansprüche 1 bis 3, wobei die Vorrichtung eine Steuereinheit (20) enthält mit:
zumindest einer elektrischen Schaltung (40) zum Erfassen des Stroms, der in jedes Motormittel (13A, 13B) fließt,
einem Mikroprozessor (30), der daran angepasst ist, Zeit- und Stromwerte, die von der elektrischen Schaltung (40) erfasst wurden, zu erfassen, zu speichern und zu vergleichen, so dass während des Kalibrierungsvorgang ein vorbestimmter positiver Stromabweichungswert des Stroms, der in jedes Motormittel (13A, 13B) fließt, in den Speicher geladen wird,
**dadurch gekennzeichnet, dass**
die Arbeitszeiten (TL1, TL2), die zum vollständigen Öffnen oder Schließen jedes Flügels erforderlich sind, erfasst und in den Speicher geladen werden,
kleine Prozentanteile (T1, T2) der Arbeitszeiten (TL1, TL2) berechnet werden, die den Zeittoleranzen für Anfahrtransienten der Motormittel (13A, 13B) und ihren Anstoß gegen Endvorrichtungen während einer Bewegung des Öffnens oder Schließens entsprechen, und Zeitbereiche (TL1 - (T1+T2), (TL2 - (T1+T2)) berechnet werden, die durch den Unterschied zwischen den Arbeitszeiten und der entsprechenden Toleranz gegeben sind,
einem Relaismittel (26) zum Zuführen von Leistung zu den Motoren,
einem elektrischen Schalter (27), vorzugsweise einem Druckknopfschalter, der dem Mikroprozessor zugeordnet ist, so dass, sobald er ein einziges Mal aktiviert wurde, er nacheinander alle Schritte des Kalibrierungsvorgangs erzielt,
wobei der Mikroprozessor (30) daran angepasst ist, das Tor so zu steuern, dass
bei jeder Bewegung des Tores (10), unabhängig davon, ob es eine Bewegung des Öffnens oder eine Bewegung des Schließens ist:
zu Beginn der berechneten Zeitbereiche (TL1 - (T1+T2), (TL2 - (T1+T2)) der stationäre Wert (Io) des Stroms, der in jedes Motormittel (13A, 13B) fließt, erfasst und zusammen mit dem Stromabweichungswert (DELTA I) in den Speicher geladen wird, um einen Stromgrenzwert zu berechnen, der durch die Summe aus dem stationären Wert (Io) und dem Stromabweichungswert (DELTA I) gegeben ist,
während der gesamten Dauer der berechneten Zeitbereiche (TL1 - (T1+T2), (TL2 - (T1+T2)) von Zeit zu Zeit der Momentanwert (I) des Stroms, der tatsächlich in jedes Motormittel (13A, 13B) fließt, erfasst und mit dem entsprechenden Stromgrenzwert (Io, DELTA I) verglichen wird und in dem Fall, in dem der Momentanwert (I) des Stroms, der tatsächlich in jedes Motormittel (13A, 13B) fließt, größer als der entsprechende Stromgrenzwert (Io, DELTA I) ist, die dem Motormittel zugeführte Leistung geschaltet wird, um eine Umkehr der Bewegung des entsprechenden Flügels durchzuführen, bis er an seinem Grenzanschlag anhält, während
innerhalb der Zeittoleranzen (T1, T2) das Motormittel angehalten wird, wenn der Momentanwert (I) des Stroms den Stromgrenzwert übersteigt.

5. Vorrichtung gemäß Anspruch 4, **dadurch gekennzeichnet, dass** der elektrischen Schalter (27) nur von dem Inneren eines Kastens aus zugänglich ist, der die Steuereinheit (20) beherbergt und ein Sicherheitsschloss aufweist.

6. Tor mit zumindest einem elektrisch betriebenen Flügel, **dadurch gekennzeichnet, dass** es durch das Verfahren gemäß einem der Ansprüche 1 bis 3 gesteuert wird und/oder mit einer Steuervorrichtung gemäß einem der Ansprüche 4 oder 5 versehen ist.

7. Tor gemäß Anspruch 6, **dadurch gekennzeichnet, dass** das Motormittel des zumindest einen Flügels ein Getriebemotor (13B) ist, der einen einphasigen Asynchronmotor verwendet.

8. Tor gemäß Anspruch 6 oder 7, **dadurch gekennzeichnet, dass** es zwei Flügel (11A, 11B) aufweist, die Größen und/oder Winkelabweichungen der Bewegungen des Öffnens und Schließens aufweisen, die voneinander verschieden sind.

## Revendications

1. Procédé permettant de garantir le bon fonctionnement d'un portail ou d'une porte (10) ayant au moins un battant (11A, 11B) actionné électriquement par des moyens à moteur associés (13A, 13B), comprenant une procédure de calibrage au cours de laquelle des données fonctionnelles de référence sont détectées et chargées par une unité de commande (20) dans une mémoire, et une phase de détection et de comparaison des données instantanées correspondantes pendant les mouvements d'ouverture et de fermeture des battants (11A, 11B) pendant le fonctionnement normal afin de provoquer une intervention immédiate sur au moins des moyens à moteur (13A, 13B) si, à partir de la comparaison, un dépassement d'au moins une valeur limite de référence est détecté, dans lequel
pendant la procédure de calibrage, est chargée dans la mémoire, par l'unité de commande (20), une valeur d'écart de courant positive prédéterminée du courant circulant dans chaque moyen à moteur (13A, 13B), **caractérisé en ce que**
sont détectées et chargées dans la mémoire les durées de fonctionnement (TL1, TL2) nécessaires à l'ouverture ou la fermeture complète de chaque battant (11A, 11 B),
sont calculés de faibles pourcentages (T1, T2) desdites durées de fonctionnement (TL1, TL2) qui correspondent à des tolérances de durée des transitoires de démarrage des moyens à moteur (13A, 13B) et leur impact sur les dispositifs d'arrêt pendant un mouvement d'ouverture ou de fermeture, et sont calculés les intervalles de temps donnés par la différence entre lesdites durées de fonctionnement et la tolérance correspondante (TL1 - (T1 + T2), TL2 - (T1 + T2)),
et, lors de n'importe quel mouvement du portail (10), qu'il s'agisse d'un mouvement d'ouverture ou d'un mouvement de fermeture :
au début desdits intervalles de temps calculés (TL1 - (T1, T2), TL2 - (T1, T2)), la valeur stable (Io) du courant circulant dans chaque moyen à moteur (13A, 13B) est détectée et chargée dans la mémoire avec ladite valeur d'écart de courant (DELTA I) afin de calculer une valeur limite de courant donnée par la somme de la valeur stable (Io) et de a valeur d'écart de courant (DELTA I) ;
pendant la durée entière desdits intervalles de temps calculés ((TL1 - (T1 + T2), TL2 - (T1 + T2)), instant après instant, la valeur instantanée (I) du courant circulant réellement dans chaque moyen à moteur (13A, 13B) est détectée et est comparée avec la valeur limite de courant correspondante (Io, DELTA I) et, lorsque la valeur instantanée (I) du courant circulant réellement dans chaque moteur à engrenages (13A, 13B) est supérieure à la valeur limite de courant correspondante (Io, DELTA I), la puissance fournie aux moyens à moteur est enclenchée de façon à effectuer une inversion du mouvement du battant correspondant jusqu'à ce qu'il s'arrête à sa butée limite ; tandis que
dans le cadre des tolérances de durée (T1, T2), si ladite valeur instantanée (1) du courant est au-delà de la limite de courant, les moyens à moteur sont arrêtés.

2. Procédé selon la revendication 1, **caractérisé en ce que** la procédure de calibrage de l'unité de commande (20) se compose des étapes suivantes, effectuées après qu'au moins l'un des battants (11A, 11B) ait été manuellement positionné dans des premières positions angulaires (p) situées autour du point intermédiaire de la trajectoire d'ouverture et de fermeture, et après que les liaisons électriques aient été établies :
l'activation courte des moyens à moteur (13A, 13B) afin d'ouvrir un peu plus les battants (11A, 11B) jusqu'aux secondes positions angulaires (o);
l'activation d'un moyen à moteur (13B) jusqu'à la fermeture complète, qui correspond à une troisième position angulaire (c), du battant correspondant (11B) ;
l'activation de l'éventuel autre moyen à moteur (13A) jusqu'à la fermeture complète, qui correspond à une troisième position angulaire (c), du battant correspondant (11A) ;
l'activation des deux moyens à moteur (13A, 13B), avec un décalage temporel éventuel, afin d'obtenir une ouverture complète des deux battants (11A, 11 B) jusqu'à des quatrièmes positions angulaires (a) et de détecter les durées de fonctionnement respectives (TL1, TL2) et de calculer lesdits intervalles de temps (TL1 - (T1, T2), TL2 - (T1, T2)).

3. Procédé selon la revendication 2, **caractérisé en ce que**, avant de lancer la procédure de calibrage, est sélectionnée, parmi un nombre discret de valeurs prédéterminées et stockées dans la mémoire de l'unité de commande (20), la valeur de ladite valeur d'écart de courant positive (DELTA I) à combiner avec ladite valeur stable (Io) de la consommation de courant.

4. Dispositif permettant de réaliser le procédé selon l'une quelconque des revendications 1 à 3, le dispositif comprenant une unité de commande (20) comprenant :
au moins un circuit électrique (40) destiné à détecter le courant circulant dans les moyens à moteur (13A, 13B),
un microprocesseur (30) adapté afin de détecter, de mémoriser et de comparer les valeurs de durée et de courant détectées par ledit circuit (40), afin que
pendant une procédure de calibrage, soit chargée dans la mémoire une valeur d'écart de courant positive prédéterminée du courant circulant dans chaque moyen à moteur (13A, 13B), **caractérisé en ce que**
sont détectées et chargées dans la mémoire les durées de fonctionnement (TL1, TL2) nécessaires à l'ouverture ou à la fermeture complète de chaque battant (11A, 11B),
sont calculés de faibles pourcentages (T1, T2) desdites durées de fonctionnement (TL1, TL2) qui correspondent à des tolérances de durées pour les transitoires de démarrage des moyens à moteur (13A, 13B), et leur impact sur les dispositifs d'arrêt pendant un mouvement d'ouverture ou de fermeture, et sont calculés les intervalles de temps donnés par la différence entre lesdites durées de fonctionnement et la tolérance correspondante (TL1 - (T1 + T2), TL2 - (T1 + T2)),
des moyens de relais (26) destinés à fournir de l'énergie aux moyens à moteur,
un commutateur électrique (27), de préférence un commutateur à bouton, associé au microprocesseur (30) afin que, dès qu'il a été activé une seule fois, il effectue séquentiellement toutes lesdites étapes de la procédure de calibrage,
le microprocesseur (30) étant adapté afin de contrôler le portail afin que :
pendant chaque mouvement du portail (10), qu'il s'agisse d'un mouvement d'ouverture ou d'un mouvement de fermeture, au début desdits intervalles de temps calculés (TL1 - (T1 + T2), TL2 - (T1 + T2)), la valeur stable (Io) du courant circulant dans chaque moyen à moteur (13A, 13B) soit détectée et chargée dans la mémoire avec ladite valeur d'écart de courant (DELTA I) de façon à calculer une limite de courant donnée par la somme de la valeur stable (Io) et de la valeur d'écart de courant (DELTA I) ;
pendant la durée entière desdits intervalles de temps calculés (TL1 - (T1 + T2), TL2 - (T1 + T2)), instant après instant, la valeur instantanée (I) du courant circulant réellement dans chaque moyen à moteur (13A, 13B) est détectée et comparée avec la valeur limite de courant correspondante (Io, DELTA I), et, lorsque la valeur instantanée (I) du courant circulant réellement dans chaque moyen à moteur (13A, 13B) est supérieure à la valeur limite de courant correspondante (Io, DEMTA I), la puissance fournie aux moyens à moteur est enclenchée afin d'effectuer une inversion du mouvement du battant correspondant jusqu'à ce qu'il s'arrête à sa butée limite ; tandis que
dans le cadre des tolérances de durée (T1, T2), si ladite valeur instantanée (I) du courant est au-delà de la valeur limite de courant, les moyens à moteur sont arrêtés.

5. Dispositif selon la revendication 4, **caractérisé en ce que** ledit commutateur électrique (27) est accessible uniquement depuis l'intérieur d'un boîtier qui contient l'unité de commande (20) et possède un caisson de sécurité.

6. Portail ayant au moins un battant actionné électriquement (11B), **caractérisé en ce qu'**il est contrôlé selon le procédé selon l'une quelconque des revendications 1 à 3 et/ou **en ce qu'**il est muni d'un dispositif de commande selon la revendication 5.

7. Portail selon la revendication 6, **caractérisé en ce que** les moyens à moteur dudit battant au moins sont un moteur à engrenages (13B) qui utilise un moteur asynchrone monophasé.

8. Portail selon la revendication 6 ou 7, **caractérisé en ce qu'**il comprend deux battants (11A, 11B) ayant des tailles et/ou des excursions angulaires des mouvements d'ouverture et de fermeture qui sont différentes les unes des autres.
